# EUROPÄISCHE PATENTANMELDUNG

(11) **EP 3 564 983 A1**
(43) Veröffentlichungstag der Anmeldung: **06.11.2019**
(21) Anmeldenummer: 19182074.5
(22) Anmeldetag: 23.09.2015
(51) Int. Cl.: H01J 41/06

(54) **IONISATIONS-VAKUUMMESSZELLE**

(62) Teilanmeldung aus: 15774543.1
(71) Anmelder: Inficon AG, 9496 Balzers (LI)
(72) Erfinder: WÜEST, Martin, 7208 Malans (CH)
(74) Vertreter: Troesch Scheidegger Werner AG

(57) **Zusammenfassung**

Eine Ionisations-Vakuummesszelle (10) umfasst ein evakuierbares Gehäuse (12) mit einem Messanschluss für ein zu messendes Vakuum an einem Endabschnitt, eine Messkammer (14) im Gehäuse (12), die mit dem Messanschluss in Fluidverbindung steht, wobei die Messkammer (14) als austauschbares Bauteil ausgebildet ist, und eine erste und eine zweite Elektrode (16, 18) in der Messkammer (14), die im Wesentlichen koaxial bezüglich einer Achse und voneinander beabstandet angeordnet sind. Ferner umfasst sind eine elektrisch isolierende und vakuumdichte Durchführung (20) für eine elektrische Zuführung zur zweiten Elektrode (18), und eine Magnetisierungsanordnung, welche ausgebildet ist, im Ionisationsraum ein Magnetfeld zu erzeugen. Erfindungsgemäss ist eine in einer Ionisationsgasrichtung der vakuumdichten Durchführung (20) vorgelagerte Abschirmung (22) vorgesehen.

## Beschreibung

Die vorliegende Erfindung betrifft eine Ionisations-Vakuummesszelle.

Vakuumdruckmessungen mit Kaltkathoden, welche auf dem Prinzip einer Gasentladung mit einer kalten Kathode basieren, sind bekannt. Bei diesen Geräten wird ein hohes elektrisches Feld zwischen Anode und Kathode angelegt, so dass eine Plasmaentladung entsteht. Darin werden Restgasteilchen ionisiert. Damit die Elektronen eine längere Verweildauer im Sensor haben, wird rechtwinklig zum elektrischen Feld ein Magnetfeld angelegt. In diesem Magnetfeld gyrieren die Elektronen und haben eine höhere Stosswahrscheinlichkeit mit dem Restgas, was die Empfindlichkeit erhöht. Wegen dem gekreuzten Magnetfeld und elektrischen Feld wird diese Klasse von Sensoren in der neueren Literatur auch als ExB-Sensoren bezeichnet, um sie von den Feldemittern zu unterscheiden, die ebenfalls kalt sind.

Beim Einschalten der Hochspannung wird ein elektrisches Feld angelegt. Ein erstes Gasteilchen wird spontan durch kosmische Strahlung ionisiert. Das entstandene Ion fliegt gegen die Kathode. Beim Auftreffen auf die Kathode werden Sekundärelektronen herausgeschlagen, die vom elektrischen Feld in Richtung Anode gezogen werden. Im Magnetfeld werden die Elektronen auf Kreisbahnen gezwungen und können mit einem Restgasatom Stösse machen und es dabei ionisieren. Schlussendlich treffen die Elektronen auf der positiv geladenen Anode auf. Der gemessene Anodenstrom ist eine Funktion des Druckes und dient als Messsignal für den Druck.

Im Stand der Technik sind das Sensorgehäuse und die Ionisationskammer aus nicht-magnetischem Material (z.B. rostfreier Stahl AISI 316) hergestellt, um das magnetische Feld, das durch den externen Magneten erzeugt wird, nicht zu beeinflussen. Das Magnetfeld im Inneren der Messkammer eines invertierten Magnetrons sollte möglichst axial verlaufen und homogen sein. Feld-Inhomogenitäten oder nicht axiale Magnetfelder führen zu Empfindlichkeitsverlusten des Sensors und zu Hysterese-Effekten.

Eine Ionisations-Vakuummesszelle umfasst ein Gehäuse mit einem Messanschluss für das zu messende Vakuum an einem Endabschnitt des Gehäuses. Der Messanschluss ist durch wenigstens eine Öffnung im Endabschnitt des Gehäuses gebildet, durch welche Öffnung sich die zu messende Umgebungs-Vakuumatmosphäre in das Gehäuse erstreckt. Ferner ist eine Messkammer umfasst, welche im Gehäuse aufnehmbar ist. Hierbei steht die Messkammer mit dem Messanschluss in Fluidverbindung. Diese Verbindung ist dergestalt, dass sich der Druck in der Messkammer bei Veränderung des zu messenden Druckes in der Umgebungsatmosphäre praktisch verzögerungsfrei auf diesen zu messenden Druck einstellt. Der zu messende Druck ist dabei der Druck unmittelbar am Messanschluss.

In der Messkammer sind eine erste und eine zweite Elektrode vorgesehen. Diese Elektroden sind im Wesentlichen koaxial bezüglich einer Achse ausgebildet und sind voneinander beabstandet angeordnet. Zwischen diesen beiden Elektroden ist ein Ionisationsraum in der Messkammer gebildet, in welchem, beim Anlegen einer entsprechenden elektrischen Potentialdifferenz zwischen den Elektroden, das Gas ionisiert wird. Die erste der Elektroden weist eine im Wesentlichen zylindrische Innenfläche als eine dem Ionisationsraum zugekehrte Elektrodenfläche auf. Die zweite Elektrode ist stabförmig ausgebildet und liegt auf der Achse in Bezug auf die zylindrische Innenfläche bzw. erstreckt sich entlang deren Achse.

Es ist eine sowohl elektrisch isolierende als auch vakuumdichte Durchführung als elektrische Zuführung zu wenigstens einer der Elektroden vorgesehen. Ferner ist ein elektrischer Isolator umfasst, welcher Abschnitte der Ionisations-Vakuummesszelle, deren elektrisches Potential sich von demjenigen der durchgeführten Zuführung oder Elektrode unterscheidet, hiervon elektrisch isoliert.

Kaltkathoden sind im Allgemeinen sehr robust im Betrieb, da im Gegensatz zu Heissionisationsmanometern kein Glühfaden reissen kann, der dann die Messung verunmöglicht. Kaltkathoden-Sensoren haben jedoch Nachteile. Ein Nachteil ist die Bildung von Flitter. Flitter sind abgeplatzte Partikelstückchen. Diese Partikelstückchen können die Distanz zwischen Polscheibe und Anodenstab überbrücken und einen Kurzschluss verursachen, womit keine Druckmessung mehr möglich ist und die Messzelle ausgetauscht werden muss. Der Flitter entsteht durch Sputtern des Kathodenmaterials und durch Re-Deposition auf weniger von Sputtern beaufschlagten Stellen im Sensor. Dabei bildet sich mit der Zeit ein dünner Film, z.B. auf der Polscheibe. Mit der Zeit wird der Dünnfilmstress der abgelagerten Schicht zu gross und Dünnfilmstückchen platzen ab. Das Abplatzen der Schicht wird gefördert durch thermische Änderungen (z.B. Ein-/Ausschalten) oder durch turbulente Gasströmungen (z.B. Belüften). Besonders gravierend sind die Flitterprobleme in der Halbleiterindustrie, da dort mit aggressiven Gasen (z.B. Halogene) gearbeitet wird. Die Halogene können das verwendete Material chemisch angreifen. Das Plasma regt die Ionen zu angeregten Zuständen an, die chemisch noch aggressiver sind. Der Sputteringeffekt führt dazu, dass insbesondere die Kathode rasch zerstäubt wird.

Zusammengefasst, werden die Oberflächen der Messkammer, welche dem Ionisationsraum ausgesetzten sind, insbesondere in Form von Ablagerungen beeinträchtigt, was deren wiederholte Reinigung erforderlich macht. Hieraus können lange Stillstandzeiten der Ionisations-Vakuummesszelle resultieren.

Im Stand der Technik ist daher vorgeschlagen, die Messkammer als austauschbares Bauteil auszubilden, um die Ionisations-Vakuummesszelle durchschnittlich zeitlich länger operativ zu halten. Als Nachteil verbleibt, dass die Messkammer sehr häufig ausgetauscht wird. So beträgt zum Beispiel die Lebensdauer eines invertierten Magnetrons in einer Implanter-Applikation nur wenige Tage bis der Sensor mit Fehlern und inkorrekter Druckanzeige versagt und die Messkammer ausgetauscht werden muss. Hieraus resultieren lange Stillstandzeiten und entstehen insgesamt hohe Kosten.

Es ist Aufgabe der vorliegenden Erfindung, eine Ionisations-Vakuummesszelle bereitzustellen, bei welcher die Nachteile aus dem Stand der Technik gelöst sind.

Erfindungsgemäss wird diese Aufgabe gelöst durch eine Ionisations-Vakuummesszelle, welche umfasst: a) ein evakuierbares Gehäuse mit einem Messanschluss für ein zu messendes Vakuum an einem Endabschnitt; b) eine Messkammer im Gehäuse, die mit dem Messanschluss in Fluidverbindung steht, wobei die Messkammer vorzugsweise als austauschbares Bauteil ausgebildet ist; b) eine erste und eine zweite Elektrode in der Messkammer, die im Wesentlichen koaxial bezüglich einer Achse und voneinander beabstandet angeordnet sind, wodurch zwischen diesen beiden Elektroden ein Ionisationsraum in der Messkammer ausgebildet ist, wobei die erste Elektrode vorzugsweise eine im Wesentlichen zylindrische Fläche aufweist und die zweite Elektrode vorzugsweise stabförmig ausgebildet ist und auf der Achse liegt; c) eine elektrisch isolierende und vakuumdichte Durchführung für eine elektrische Zuführung zur zweiten Elektrode, umfassend einen elektrischen Isolator, wobei die zweite Elektrode durch diesen Isolator abdichtend hindurchgeführt ist; und d) eine Magnetisierungsanordnung, welche ausgebildet ist, im Ionisationsraum ein Magnetfeld zu erzeugen. Die Ionisations-Vakuummesszelle ist dadurch gekennzeichnet, dass die Messkammer magnetisches Material umfasst.

Ausführungsvarianten der vorliegenden Erfindung zeichnet sich dadurch aus, dass die erste Elektrode und/oder die zweite Elektrode aus magnetischem Material besteht bzw. bestehen, wobei zusätzlich gemäss einer weiteren Ausgestaltung der Erfindung vorgeschlagen wird, dass die erste und/oder die zweite Elektrode mit dem magnetischen Material beschichtet ist bzw. sind.

Die Verwendung von magnetischem Material als Material für die Messkammer ist bislang vollkommen unbekannt. Bislang herrschte die Meinung vor, dass die Messkammer frei von magnetischem Material zu halten ist, da magnetisches Material die Bahnbewegung der geladenen Teilchen beeinflusst. Die Verwendung von magnetischen Materialien wurde bislang im Stand der Technik ausgeschlagen, da diese Materialien die magnetische Feldstärke im Sensor reduzieren und die Sensorcharakteristik verändern. Erfindungsgemäss ist auf völlig überraschende Weise eine Ionisations-Vakuummesszelle geschaffen, welche weiterhin zuverlässige Messergebnisse generiert und deren Messkammer im Vergleich zum Stand der Technik eine wesentlich höhere Lebensdauer hat.

Ebenso wurde im Stand der Technik davon Abstand genommen, Nickel als Material für die Messkammer zu verwenden, da Nickel eine höhere Sputterausbeute (sputtering yield) hat als bislang verwendete Materialien, wie beispielsweise rostfreier Stahl. Die Sputterausbeute von Nickel beträgt 1.5 (herausgeschlagene) Atome pro auftreffendes Ion. Somit war im Stand der Technik die Verwendung von Nickel als Material für die Messkammer überhaupt kein Thema.

Die erfindungsgemässe Verwendung eines magnetischen Materials, wie beispielsweise Nickel, als Material für die Messkammer trägt völlig überraschend entscheidend zur Erhöhung der Lebensdauer von der Messkammer bei. Nickel erzeugt magnetische Flitter, die vorteilhaft an der wenigstens einen in der Messkammer umfassten magnetischen Polscheibe festgehalten werden und somit weitaus weniger innerhalb der Messkammer frei herumfliegen. Ein weiterer Vorteil der Verwendung von Nickel als Material für die Messkammer besteht darin, dass Nickel eine hohe Widerstandsfähigkeit gegenüber chemisch aggressiven Fluiden hat. So ist Nickel beispielsweise inert gegenüber Fluor.

Im Stand der Technik sprach also bislang alles gegen die Verwendung von magnetischen Materialien, insbesondere von Nickel als Material für die Messkammer. Völlig überraschend hat sich erfindungsgemäss herausgestellt, dass durch die Verwendung von Nickel als Material für die Messkammer die Lebensdauer der Messkammer im Vergleich zum Stand der Technik um den Faktor 2,5 erhöht wird. Es zeigt sich hierbei als besonders vorteilhaft, dass entstehender Flitter, welcher aufgrund der Verwendung von Nickel als Material für die Messkammer magnetisch ist, durch die magnetischen Polscheiben innerhalb des Ionisationsraums sehr viel zuverlässiger an deren Oberfläche gehalten werden als nicht-magnetischer Flitter. Gemäss der Erfindung gelangt daher weitaus weniger Flitter an Stellen der Ionisations-Vakuummesszelle, an denen der Flitter Kriechströme oder Kurzschlüsse verursachen könnte.

Als magnetisches Material eignet sich neben Nickel auch Kobalt bestens. Kobalt hat eine Sputterausbeute von 1.3 (herausgeschlagene Atome pro auftreffendes Ion.

Neben den vorstehend erwähnten reinen oder nahezu reinen magnetischen Materialien kommen in weiteren Ausführungsvarianten magnetische Legierungen als magnetisches Material zum Einsatz. Dabei hat sich gezeigt, dass mindestens 45% Nickel, vorzugsweise mindestens 49% Nickel, und/oder mindestens 45% Kobalt, vorzugsweise mindestens 49% Kobalt, vorhanden sind.

Ferner hat es sich gezeigt, dass sich die folgenden Materialien als magnetisches Material gemäss der Erfindung eigenen:
- Permalloy (70 bis 80% Ni, ca. 20% Fe, ev. mit geringen Anteilen mit Mo und Cu);
- Perminvar (45% Ni, 30% Fe, 25 Co);
- NIMONIC (ca. 80% Ni, 20% Cr);
- Radiometal 4550 (45% Ni, 55% Fe);
- AlNiCo.

Bei weiteren Ausführungsvarianten der vorliegenden Erfindung ist die Messkammer messanschlussseitig in das Gehäuse eingeschoben und am Gehäuse lösbar arretiert. Hierdurch ist die Messkammer vorteilhaft schnell und zuverlässig entnehmbar in das Gehäuse der Ionisations-Vakuummesszelle einbaubar.

Bei weiteren Ausführungsvarianten der vorliegenden Erfindung umfasst die Ionisations-Vakuummesszelle ferner ein Arretierungsorgan, welches axial oder radial zwischen dem Gehäuse und der Messkammer wirkt, zur lösbaren Befestigung zwischen dem Gehäuse und der hierin eingeschobenen Messkammer.

Bei weiteren Ausführungsvarianten der vorliegenden Erfindung umfasst das Arretierungsorgan eine Schraubverbindung, eine Karabiner-Verbindung oder einen Sprengring. Somit ist die Messkammer messanschlussseitig schnell und zuverlässig in das Gehäuse der Ionisations-Vakuummesszelle auf Anschlag einschiebbar und am Gehäuse lösbar arretierbar.

Bei weiteren Ausführungsvarianten der vorliegenden Erfindung ist die Magnetisierungsanordnung radial ausserhalb der Messkammer angeordnet und dazu ausgebildet ein Magnetfeld zu erzeugen, dessen Magnetfeldlinien innerhalb des Ionisationsraums im Wesentlichen parallel zur Achse hiervon verlaufen. Unter dem Begriff Magnetisierungsanordnung ist hierbei eine Anordnung aus Permanentmagneten mit passiven Magnetfeldführungsorganen, wie z.B. Joche, Polschuhe, Shunts, zu verstehen, welche beispielsweise ferromagnetische Materialien umfassen. Unter dem Begriff Magnetisierungsanordnung zählt jedoch auch eine Anordnung aus Permanentmagneten ohne passive Magnetfeldführungsorgane.

In weiteren Ausführungsformen der erfindungsgemässen Vakuummesszelle ist ferner eine in einer Ionisationsgasrichtung der vakuumdichten Durchführung vorgelagerte Abschirmung vorgesehen. Diese Abschirmung dient insbesondere zum Schutz der vakuumdichten Durchführung gegen abgestäubte Teilchen aus der Messkammer. Es wird ausdrücklich darauf hingewiesen, dass diese Ausführungsvariante nicht zwingend eine Messkammer aus Nickel bzw. mit Nickel umfassen muss. Entsprechend wird ein Schutz der Abschirmung unabhängig von einer Nickel umfassenden Messkammer vorbehalten.

Bei weiteren Ausführungsformen der vorliegenden Erfindung ist die Abschirmung innerhalb des Gehäuses derart angeordnet, dass ein wesentlicher Abschnitt der vakuumdichten Durchführung abgeschirmt ist. Somit wird die vakuumdichte Durchführung zuverlässig geschützt und deren Lebensdauer und hiermit auch die Lebensdauer der Messkammer wesentlich verlängert.

Bei noch weiteren Ausführungsvarianten der vorliegenden Erfindung umfasst die Abschirmung ein Ablenkblech, ausgebildet im Wesentlichen zur Ablenkung von in der Messkammer erzeugten Partikeln. Unter dem Begriff Partikel können hierbei die zuvor genannten Flitter bzw. abgestäubte Teilchen aus der Messkammer als auch durch die Ionisation erzeugte Partikel, beispielsweise Elektronen und Atome, verstanden werden. Das Ablenkblech kann als auskragendes zylindrisches Blech ausgebildet sein, welches koaxial zur Längsachse der Messkammer verläuft.

Bei weiteren Ausführungsvarianten der vorliegenden Erfindung ist die Abschirmung in einem Abschnitt zwischen der Messkammer und dem Gehäuse angeordnet und ist als Labyrinthpfad ausgebildet. Hierdurch wird die vakuumdichte Durchführung weiterhin zuverlässig geschützt, da beispielsweise durch die Ionisierung erzeugte Atome auf ihrem Weg durch den Labyrinthpfad hierbei mehrfach auf Wandabschnitte der Abschirmung aufprallen, an denen sie mit hoher Wahrscheinlichkeit abgelagert werden bevor sie die vakuumdichte Durchführung erreichen. Die Abschirmung kann als auskragendes Bauelement mit Seitenrändern verstanden werden, wobei der Labyrinthpfad drastisch die Wahrscheinlichkeit reduziert, dass Partikel auf direktem Weg zur vakuumdichten Durchführung gelangen. Die Partikel treffen mehrfach auf Wandabschnitte der Abschirmung auf und verlieren somit stark an Geschwindigkeit und somit Energie. Hierdurch wird die Kontamination der vakuumdichten Durchführung wesentlich verringert und hinausgezögert.

Bei einer weiteren Ausführungsvariante der vorliegenden Erfindung umfasst die Abschirmung wenigstens abschnittsweise Keramik. Durch die Verwendung von Keramik für die Abschirmung wird die vakuumdichte Durchführung weiter zuverlässig gegen Kontamination geschützt.

Es wird ausdrücklich darauf hingewiesen, dass die vorstehenden Ausführungsvarianten beliebig kombinierbar sind. Lediglich diejenigen Kombinationen von Ausführungsvarianten sind ausgeschlossen, die durch die Kombination zu Widersprüchen führen würden.

Im Folgenden wird die vorliegende Erfindung anhand von in der Zeichnung dargestellten Ausführungsbeispielen weiter erläutert. Dabei zeigt:

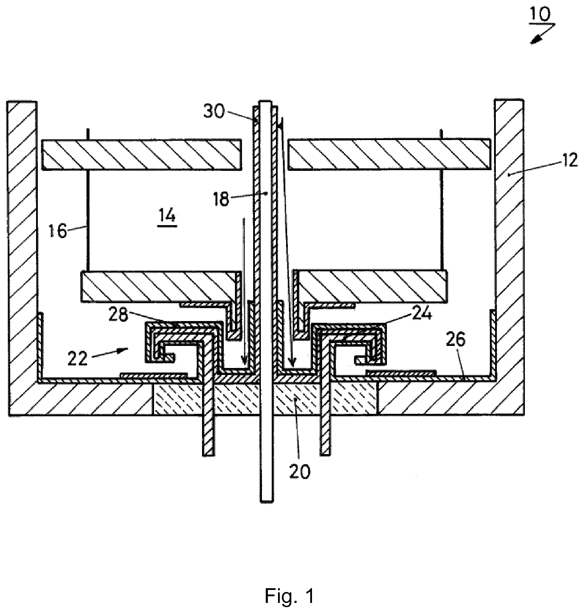

- Figur 1: eine schematische Schnittansicht einer Ionisations-Vakuummesszelle in einer vergrösserten Darstellung im Bereich der vakuumdichten Durchführung.

Figur 1 zeigt eine Ionisations-Vakuummesszelle 10 in einer schematischen Längsschnittansicht entlang der Axialrichtung. Die Ionisations-Vakuummesszelle 10 umfasst ein evakuierbares Gehäuse 12 mit einem Messanschluss (nicht gezeigt) für ein zu messendes Vakuum. In das Gehäuse 12 ist eine Messkammer 14 eingeschoben, welche mit dem Messanschluss in Fluidverbindung steht. Die Messkammer 14 ist hierbei beispielsweise als austauschbares Bauteil ausgebildet und wird beispielsweise messanschlussseitig in das Gehäuse 12 eingeschoben und hieran lösbar arretiert.

Die Messkammer 14 umfasst eine erste Elektrode 16 und eine zweite Elektrode 18. Die erste Elektrode 16 ist zylindrisch ausgebildet und weist eine zylindrische Innenfläche auf. Die zweite Elektrode 18 ist stabförmig ausgebildet. Beide Elektroden 16, 18 sind bezüglich der Längsachse der Ionisations-Vakuummesszelle 10 koaxial voneinander beabstandet angeordnet. Hierdurch wird innerhalb der Messkammer 14 zwischen diesen beiden Elektroden 16, 18 ein Ionisationsraum ausgebildet. Die erste Elektrode 16 wirkt als Kathode, während die zweite Elektrode 18 als Anode wirkt. Zwischen diesen beiden Elektroden 16, 18 wird eine hinreichend hohe Gleichspannung angelegt, wodurch eine Gasentladung gezündet und unterhalten wird. Der Entladungsstrom bildet hierbei ein Mass für den zu messenden Druck.

Die Ionisations-Vakuummesszelle 10 umfasst ferner eine elektrisch isolierende und vakuumdichte Durchführung 20 zur zweiten Elektrode 18 (Anode). Die vakuumdichte Durchführung 20 umfasst einen elektrischen Isolator, beispielsweise Glas. Die vakuumdichte Durchführung 20 kann als ein Glasring ausgebildet sein, welcher aufgeschmolzen ist. Die zweite Elektrode 18 ragt durch diesen Isolator abdichtend hindurch. Somit isoliert die vakuumdichte Durchführung 20 die zweite Elektrode 18 elektrisch zuverlässig gegen das Gehäuse 12. Hierbei ist zu erwähnen, dass im Betrieb die zweite Elektrode auf ein elektrisches Potenzial von +3,3kV gelegt sein kann, während das Gehäuse im Wesentlichen auf Erdungspotenzial gelegt ist (0V). Die Durchführung 20 im Anodenbereich sollte bis zu 5kV widerstehen können.

Ferner umfasst die Ionisations-Vakuummesszelle 10 eine Magnetisierungsanordnung, welche in Figur 1 aus Gründen zur besseren Darstellung ausgelassen ist. Die Magnetisierungsanordnung dient zur Erzeugung eines Magnetfeldes im Ionisationsraum der Messkammer 14. Dieses Magnetfeld führt die Elektronen auf ihrem Weg von der ersten Elektrode 16 (Kathode) zur zweiten Elektrode 18 (Anode) auf spiralartigen Bahnen, wodurch die Bahn der Elektronen verlängert wird. Hierdurch wird die Trefferwahrscheinlichkeit mit den Gasteilchen erhöht und somit insgesamt der Ionisierungsgrad verbessert. Somit wird erreicht, dass die Entladung über weite Druckbereiche stattfindet und sich stabil und reproduzierbar verhält.

Im Stand der Technik wurde bislang als Material für die Messkammer 14 ein nicht-magnetisches Material verwendet, beispielsweise rostfreier Stahl AISI 316, damit das magnetische Feld im Inneren des Ionisationsraums im Wesentlichen nicht beeinflusst wird. Erfindungsgemäss wird nun vorgeschlagen, dass das Material der Messkammer Nickel umfasst. Es hat sich erfindungsgemäss herausgestellt, dass das ferromagnetische Material Nickel ganz wesentlich dazu beiträgt, dass, in Relation zum Stand der Technik, Flitter weitaus geringer an Stellen gelangen und absetzen, an denen die Flitter Kriechströme oder Kurzschlüsse verursachen könnten. Durch die Verwendung von Nickel als Material der in der Messkammer 14 umfassten ersten Elektrode 16 werden vorteilhaft die (magnetischen) Flitter an den Oberflächen der magnetischen Polscheiben der Messkammer 14 gehalten. Hierdurch stören die Flitter nicht den Betrieb der Ionisations-Vakuummesszelle 10. Dies ist bei Flitter resultierend aus rostfreiem Stahl als Material für die Messkammer, wie im Stand der Technik verwendet, nicht der Fall.

Eine weitere Ausführungsvariante der Ionisation-Vakuummesszelle 10 umfasst ferner eine Abschirmung 22. Diesbezüglich wird ausdrücklich darauf hingewiesen, dass diese weitere Ausführungsvariante nicht zwingend eine Messkammer aus Nickel umfassen muss. Denkbar ist insbesondere, dass die Messkammer aus anderem Material bestehen kann, also insbesondere kein Nickel aufweist.

Die erfindungsgemässe Abschirmung 22 ist nun, in Ionisationsgasrichtung betrachtet, der vakuumdichten Durchführung 20 vorgelagert. Hierbei ist die Abschirmung 22 derart angeordnet und ausgebildet, dass ein wesentlicher Abschnitt der vakuumdichten Durchführung 20 abgeschirmt ist. Die Abschirmung 22 umfasst ein auskragendes bzw. kragenförmig ausgebildetes Keramikelement 24, welches zylinderförmig ausgebildet sein kann und im Wesentlichen koaxial zur ersten und zweiten Elektrode 16, 18 angeordnet ist. Das zylinderförmige Keramikelement 24 durchläuft ebenfalls abdichtend durch die vakuumdichte Durchführung 20. Insgesamt umgibt das zylinderförmige Keramikelement 24 zuverlässig die zweite Elektrode 18 im Bereich des unteren Gehäuseabschnitts von der Ionisations-Vakuummesszelle 10. Somit wird insgesamt eine gute Isolation gegen Spannungsdurchschlag zwischen der zweiten Elektrode 18 und dem Gehäuse 12 von der Ionisations-Vakuummesszelle 10 geschaffen.

Das Keramikelement 24 umfasst beispielsweise Aluminiumoxid (AlO₂). Die hohe Durchschlagsfestigkeit und maximale Betriebstemperatur von bis zu 1900 °C machen Aluminiumoxid zum idealen Isolator. Der untere Bereich des Gehäuses 12 ist im Inneren mit einer Isolationsschicht 26 versehen, welche durch ALD (Atomic Layer Deposition) abgelagert ist. Zur Veranschaulichung sind beispielhaft dünnschichtige Kontaminationen 28 innerhalb der Ionisations-Vakuummesszelle 10 angezeigt. Wie zu erkennen, ist ein wesentlicher Bereich unterhalb der Abschirmung 22 frei von Kontaminationen 28, da der durch die Abschirmung 22 realisierte Labyrinthpfad erschwert, dass Partikel die Unterseite und somit die vakuumdichte Durchführung 20 erreichen. Optional kann die Aussenseite der stabförmigen zweiten Elektrode 18 mit einer Beschichtung 30 versehen sein, welche gegen Plasmaätzen widerstandsfähig ist. Somit wird die Elektrode zuverlässig geschützt. Denkbar ist somit gemäss einer weiteren Ausführungsvariante der vorliegenden Erfindung, dass lediglich die stabförmige zweite Elektrode 18 aus einem möglichst inerten, plasma-resistenten Material besteht (beispielsweise Hastelloy C-22: Ni mit 22% Cr, 13% Mo, 3% W, 3% Fe), mithin also nicht zwingend aus einem magnetischen Material besteht.

## Patentansprüche

1. Ionisations-Vakuummesszelle (10), umfassend:
a) ein evakuierbares Gehäuse (12) mit einem Messanschluss für ein zu messendes Vakuum an einem Endabschnitt;
b) eine Messkammer (14) im Gehäuse (12), die mit dem Messanschluss in Fluidverbindung steht, wobei die Messkammer (14) vorzugsweise als austauschbares Bauteil ausgebildet ist;
b) eine erste und eine zweite Elektrode (16, 18) in der Messkammer (14), die im Wesentlichen koaxial bezüglich einer Achse und voneinander beabstandet angeordnet sind, wodurch zwischen diesen beiden Elektroden (16, 18) ein Ionisationsraum in der Messkammer (14) ausgebildet ist, wobei die erste Elektrode (16) vorzugsweise eine im Wesentlichen zylindrische Fläche aufweist und die zweite Elektrode (18) vorzugsweise stabförmig ausgebildet ist und auf der Achse liegt;
c) eine elektrisch isolierende und vakuumdichte Durchführung (20) für eine elektrische Zuführung zur zweiten Elektrode (18), umfassend einen elektrischen Isolator, wobei die zweite Elektrode (18) durch diesen Isolator abdichtend hindurchgeführt ist; und
d) eine Magnetisierungsanordnung, welche ausgebildet ist, im Ionisationsraum ein Magnetfeld zu erzeugen,
**dadurch gekennzeichnet, dass** eine in einer Ionisationsgasrichtung der vakuumdichten Durchführung (20) vorgelagerte Abschirmung (22) vorgesehen ist.

2. Ionisations-Vakuummesszelle (10) nach Anspruch 1, **dadurch gekennzeichnet, dass** die Abschirmung (22) innerhalb des Gehäuses (12) derart angeordnet ist, dass ein wesentlicher Abschnitt der vakuumdichten Durchführung (20) abgeschirmt ist.

3. Ionisations-Vakuummesszelle (10) nach Anspruch 1 oder 2, **dadurch gekennzeichnet, dass** die Abschirmung (22) ein Ablenkblech umfasst, ausgebildet zur im Wesentlichen Ablenkung von in der Messkammer erzeugten Partikeln.

4. Ionisations-Vakuummesszelle (10) nach Anspruch 3, **dadurch gekennzeichnet, dass** das Ablenkblech als auskragendes zylindrisches Blech ausgebildet ist, welches koaxial zur Achse der Messkammer (14) verläuft.

5. Ionisations-Vakuummesszelle (10) nach Anspruch 3 oder 4, **dadurch gekennzeichnet, dass** die Abschirmung (22) in einem Abschnitt zwischen der Messkammer (14) und dem Gehäuse (12) angeordnet ist und als Labyrinthpfad ausgebildet ist.

6. Ionisations-Vakuummesszelle (10) nach Anspruch 3 oder 4, **dadurch gekennzeichnet, dass** die Abschirmung (22) ist als auskragendes Bauelement mit Seitenrändern gebildet.

7. Ionisations-Vakuummesszelle (10) nach einem der vorangehenden Ansprüche, **dadurch gekennzeichnet, dass** die Abschirmung (22) wenigstens abschnittsweise Keramik umfasst.

8. Ionisations-Vakuummesszelle (10) nach einem der vorangehenden Ansprüche, **dadurch gekennzeichnet, dass** die zweite Elektrode (18) aus einem inerten, plasma-resistenten Material besteht.

9. Ionisations-Vakuummesszelle (10) nach Anspruch 8, **dadurch gekennzeichnet, dass** die zweite Elektrode (18) aus Hastelloy besteht, bestehend aus Ni mit 22% Cr, 13% Mo, 3% W und 3% Fe.

10. Ionisations-Vakuummesszelle (10) nach einem der vorangehenden Ansprüche, wobei die Messkammer (14) messanschlussseitig in das Gehäuse (12) eingeschoben ist und am Gehäuse (12) lösbar arretiert ist.

11. Ionisations-Vakuummesszelle (10) nach einem der vorangehenden Ansprüche, ferner umfassend ein Arretierungsorgan, welches axial oder radial zwischen dem Gehäuse (12) und der Messkammer (14) wirkt, zur lösbaren Befestigung zwischen dem Gehäuse (12) und der hierin eingeschobenen Messkammer (14).

12. Ionisations-Vakuummesszelle (10) nach Anspruch 11, wobei das Arretierungsorgan vorzugsweise eine Schraubverbindung, eine Karabiner-Verbindung oder einen Sprengring umfasst.

13. Ionisations-Vakuummesszelle (10) nach einem der vorhergehenden Ansprüche, wobei die Magnetisierungsanordnung radial ausserhalb der Messkammer (14) angeordnet ist und dazu ausgebildet ist, ein Magnetfeld zu erzeugen, dessen Magnetfeldlinien innerhalb des Ionisationsraums im Wesentlichen parallel zur Achse hiervon verlaufen.
